Europäisches Patentamt

European Patent Office

Office européen des brevets

(11) Veröffentlichungsnummer : **0 092 046**
**B1**

(12) **EUROPÄISCHE PATENTSCHRIFT**

(45) Veröffentlichungstag der Patentschrift :
07.08.85

(51) Int. Cl.⁴ : **A 47 J 37/04**

(21) Anmeldenummer : 83102252.0

(22) Anmeldetag : 08.03.83

(54) **Durchlaufgrill.**

(30) Priorität : 21.04.82 DE 3214684

(43) Veröffentlichungstag der Anmeldung :
26.10.83 Patentblatt 83/43

(45) Bekanntmachung des Hinweises auf die Patenterteilung : 07.08.85 Patentblatt 85/32

(84) Benannte Vertragsstaaten :
AT BE CH DE FR GB IT LI NL SE

(56) Entgegenhaltungen :
DE-U- 8 119 752
US-A- 2 243 492
US-A- 3 401 626
US-A- 3 566 773
US-A- 4 261 257

(73) Patentinhaber : Gutekunst Küchengeräte GmbH
Hauptstrasse 39
D-6967 Buchen-Bödigheim (DE)

(72) Erfinder : Gutekunst, Peter
Hauptstrasse 39
D-6967 Buchen-Bödigheim (DE)

(74) Vertreter : Hach, Hans Karl, Dr.
Tarunstrasse 23
D-6950 Mosbach-Waldstadt (DE)

Jouve, 18, rue St-Denis, 75001 Paris, France

## Beschreibung

Die Erfindung betrifft einen Durchlaufgrill insbesondere für Steaks mit einem Schacht, dessen vertikal gerichteter Einlaufabschnitt sich zwischen zwei gegenläufig mit gleicher Umfangsgeschwindigkeit und nach unten fördernd antreibbaren beheizbaren und achsparallel angeordneten Einlaufwalzen erstreckt und an den sich ein zweiter Schachtabschnitt leicht angewinkelt anschließt, der sich zwischen der einen Einlaufwalze und einer dritten beheizbaren Walze erstreckt die zu dieser Einlaufwalze achsparallel angeordnet, gegenläufig und mit gleicher Umfangsgeschwindigkeit antreibbar ist.

Bei einem aus dem DE-GM 81 19 752 bekannten Grill ist die Breite des Schachtes so gewählt, daß ein Steak unter leichtem Anpressdruck den Schacht passieren kann.

Aufgabe der Erfindung ist es, einen Grill dieser Art dahingehend zu verbessern, daß auch Steaks unterschiedlicher Stärke beziehungsweise Dicke bearbeitet werden können und beim Durchlauf optimalem Anpressdruck unterliegen.

Die Erfindung ist durch die Merkmale im Anspruch 1 gekennzeichnet.

Obwohl ein Steak beim Durchlauf mit seiner einen Seite an zwei Walzen nacheinander vorbeiläuft, genügt es, die eine Walze, die an beiden Schachtabschnitten beteiligt ist, zu verstellen, um den Schacht in beiden Abschnitten gleichmäßig zu erweitern oder zu verengen. Das führt zu einer vorteilhaften, einfachen Ausgestaltung des verstellbaren Grills.

Die Walzen sind zweckmäßig vor unmittelbarem Zugriff geschützt, um Unfälle zu vermeiden. Dem trägt eine Weiterbildung Rechnung, die gekennzeichnet ist durch eine Abdeckung für die Walzen, in der in nach oben gerichteter Verlängerung des Einlaufabschnittes ein Einschubschlitz ausgespart ist, der in seiner Breite entsprechend der eingestellten Breite des Schachtes einstellbar ist.

Damit eine Bedienungsperson deutlich auf die jeweilige Schachteinstellung hingewiesen wird, um zu vermeiden, daß sie der jeweiligen Schachteinstellung nicht entsprechende, zu breite oder zu schmale Steaks eingibt, empfiehlt sich eine Einstellvorrichtung zum Einstellen der Schachtbreite und eine mit dieser gekoppelten Einstellvorrichtung für die Breite des Einschubschlitzes. Die Bedienungsperson kann sich dann nach der gut erkennbaren, jeweils eingestellten Breite des Schlitzes orientieren und, wenn diese nicht dem zum Grillen vorgesehenen Steak entspricht, die Schlitzbreite und damit auch die Schachtbreite nachstellen.

Aufgabe einer Weiterbildung ist es, den Durchlauf der Steaks zu beschleunigen, und diese Weiterbildung ist gekennzeichnet durch einen Mikrowellenstrahler, dessen Strahlung in den Schacht gerichtet ist. Durch die Mikrowellen wird eine zusätzliche Erhitzung der Steaks erzielt, wodurch die Gesamtdurchlaufzeit abgekürzt werden kann. Die Mikrowellen wirken, im Gegensatz zur Beheizung der Walzen, auch unmittelbar auf die inneren Steakbereiche. Durch eine entsprechende Dosierung der Mikrowelleneinwirkung ist es möglich, bei gleichbleibender Durchlaufgeschwindigkeit und gleichbleibender Beheizung der Walzen die inneren Bereiche des Steaks mehr oder weniger stark zu garen. Im Gegensatz zu der Walzenbeheizung läßt sich die Intensität der Mikrowellen sehr schnell verstellen, so daß man bei nacheinander durchlaufenden Steaks das eine im Inneren intensiv garen kann und das nachfolgende weniger intensiv, indem man die Mikrowellenbestrahlung entsprechend verstellt. In entsprechender Weise kann die Intensität der Mikrowellen auch sehr schnell der jeweils eingestellten Schachtbreite und damit der Breite der durchlaufenden Steaks angepaßt werden. Diese Anpassung erfolgt vorzugsweise selbsttätig entsprechend der Verstellung der Breite des Schachtes.

Die Erfindung wird nun anhand der beigefügten Zeichnung näher erläutert.

In der Zeichnung zeigt :

Figur 1 einen Grill von oben gesehen bei aufgebrochenem Gehäuse,

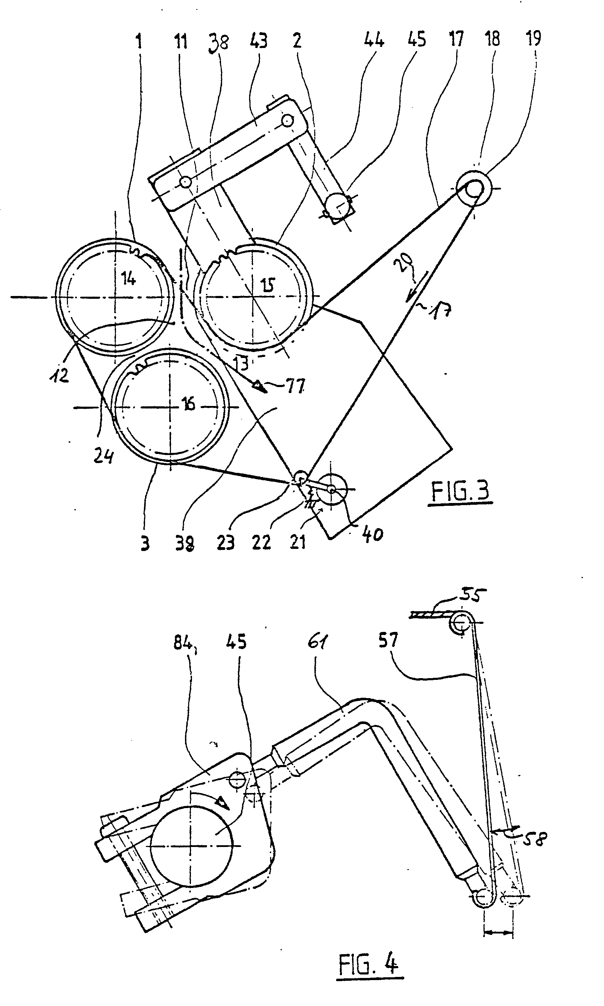

Figur 2 bis 4 die Teilansichten gemäß den Pfeilen II, III, IV aus Figur 1, jeweils teilweise aufgebrochen, und

Figur 5 schematisch ein zugehöriges Steuergerät.

Es sind insgesamt drei beheizbare Walzen 1, 2, 3 vorgesehen, die mit horizontaler Achse und beidseitigen Wellenstummeln 4 bis 9 im Gehäuse 10 drehbar gelagert sind. Die beiden Walzen 1 und 2, die sogenannten Einlaufwalzen, begrenzen zwischen sich den vertikalen Einlaufabschnitt 11 eines im wesentlichen vertikalen Schachtes 12. Die Walzen 1 und 3 begrenzen einen weiteren Schachtabschnitt 13 dieses Schachtes, der leicht gegen die vertikale Richtung abgewinkelt ist. Die Walzen 1, 2, 3 sind über aufgesteckte Ritzel 14 bis 16 an eine Kette 17 gekuppelt, die über das Antriebsritzel 18 des Antriebsmotors 19 in Pfeilrichtung 20 umlaufend angetrieben wird. Die Kette 17 wird durch den Kettenspanner 21, der mit einem durch Feder 22 belasteten Zugritzel 23 ausgestattet ist, strammgehalten. Das Ritzel 14 der Walze 1 kämmt mit der Außenseite der Kette 17, während die Ritzel 15 und 16 der beiden anderen Walzen mit der Innenseite der Kette kämmen, so daß die Walzen in Pfeilrichtung umlaufend, entsprechend einer Förderrichtung im Schacht 12, von oben nach unten angetrieben werden. Die Umfangsgeschwindigkeit aller Walzen ist die gleiche, weil die Walzen und auch die Ritzel 14, 15, 16 gleichen Durchmesser haben.

Der Einlaufabschnitt 11 und der Schachtabschnitt 13 sind an ihrer engsten Stelle gleich breit. Sie können gemeinsam verbreitert werden durch Verstellen der Walze 2, die zu diesem Zweck beweglich gelagert ist. Der Zwischenraum 24 zwischen den feststehenden Walzen 1, 2 ist schmaler als die kleinstmögliche Breite des Schachtes 12.

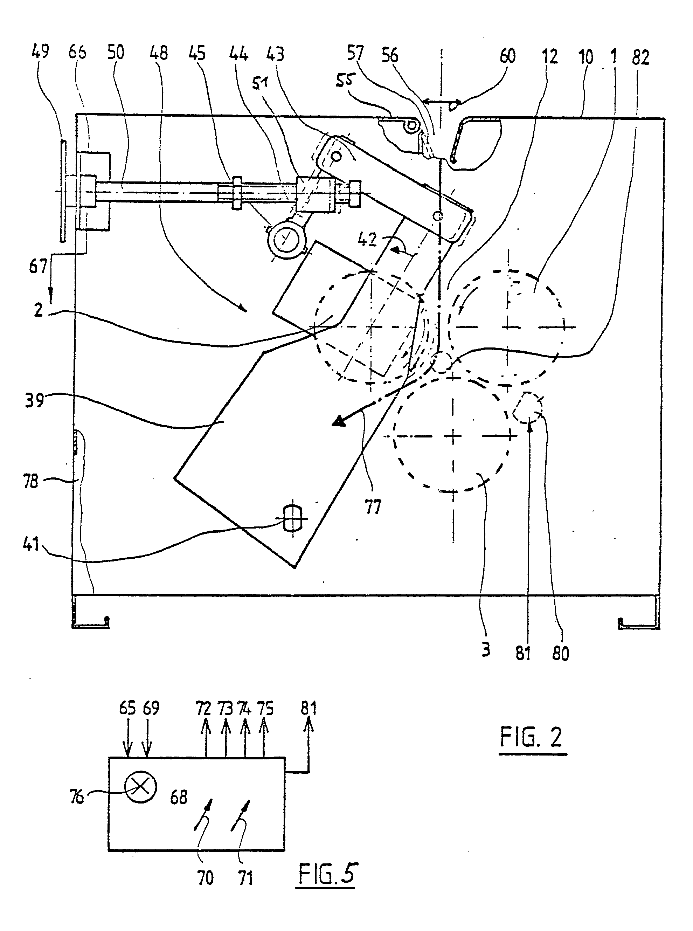

Während die Lager 30, 32, 36, 37 der Walzen 1 und 3 ortsfest in stationären Lagerwänden 34, 35 des Gehäuses 10 angeordnet sind, sind die beiden Lager 31, 33 der Walze 2 an den schwerkender Enden von Lagerbügeln 38, 39 angeordnet. Diese beiden Lagerbügel sind mit ihren anderen Erden in Schwenklagern 40, 41 in den Lagerwänden 34, 35 schwenkbar um eine Achse parallel zu den Walzenachsen gelagert. Wenn die Lagerbügel 38, 39 in Pfeilrichtung 42 geschwenkt werden, dann verbreitern sich der Einlaufabschnitt 11 und der Schachtabschnitt 13. Sie verengen sich bei Schwenken der Lagerbügel in umgekehrter Richtung. In den Figuren 2 und 5 sind weitere Schwenkstellungen strichpunktiert angedeutet. Am schwenkenden Ende des Lagerbügels 39 ist ein Hebel 43 angelenkt, an dem ein weiterer Hebel 44 angelenkt ist, der mit seinem freien Ende an einer Welle 45 befestigt ist. Die Welle 45 erstreckt sich achsparallel zu den Achsen der Walzen 1 bis 3 und ist drehbar in den Lagerwänden 34, 35 gelagert. Der Lagerbügel 38 ist mit den Hebeln 43, 44 entsprechenden Hebeln spiegelsymmetrisch zur Mittelebene 46 ausgestattet und am anderen Ende der Welle 45 befestigt. Die Folge ist, wenn der Lagerbügel 39 schwenkt, dreht sich die Welle 45 und veranlaßt den Lagerbügel 38 zu einer entsprechenden Schwenkbewegung.

Die aus dem Lagerbügel 39 und den Hebeln 43, 44 und den auf der anderen Seite gelegenen Teilen sowie der Welle 45 bestehende Einstellvorrichtung 48 wirkt als Parallelführung für die Walze 2, die auf diese Weise in jeder Schwenkstellung achsparallel zu den übrigen Walzen 1 und 3 ausgerichtet ist.

Zum Bedienen der Einstellvorrichtung 48 dient eine von außen zugängliche Handhabe 49, mittels derer eine Gewindestange 50 drehbar ist, die in eine Gewindemuffe 51 eingeschraubt ist. Die Gewindemuffe 51 ist verdrehungsgesichert an dem Hebel 44 angelenkt und zieht beim Drehen der Handhabe 49 den Lagerbügel 39 in Pfeilrichtung 42 oder schiebt ihn in Gegenrichtung.

In nach oben gerichteter Verlängerung des Einlaufabschnitts 11 ist in einer als Abdeckung 55 dienenden Wand des Gehäuses 10 ein Einschubschlitz 56 ausgespart, der sich fast über die ganze axiale Länge der Walzen 1, 2 und 3 erstreckt. Mit 57 ist eine um eine Achse parallel zu den Walzenachsen schwenkbare Sperre bezeichnet, mit Hilfe derer die freie Preite gemäß Doppelpfeil 60 des Finschubschlitzes 56 verstellt werden kann. Die Verstellung wird immer so getroffen, daß die Breite des Finschubschlitzes 56 etwa so groß ist wie die Breite des Schachtes 12. Zu diesem Zweck ist die Sperre 57 über eine Koppelstange 61 an einem an der Welle 45 verklemmten Klemmbügel 81 angelenkt. Auf diese Weise ist sichergestellt, daß bei Betätigung der Einstellvorrichtung 48 zur Verstellung der Schachtbreite entsprechend auch die Sperre 57 verstellt und damit die Breite des Einschubschlitzes 56 verstellt wird, so daß dieser Steaks gerade mit einer solchen Breite passieren läßt, die bei der eingestellten Breite des Schachtes 12 mit optimalem Anpreßdruck verarbeitet werden können.

Die Walzen 1, 2 und 3 sind elektrisch beheizt durch eine innerhalb der Walzen angeordnete Heizvorrichtung, deren elektrische Zuleitungen durch die als Rohre ausgebildeten Wellenstummel 7, 8 und 9 herausgeführt sind.

Mit 65 ist ein Thermofühler bezeichnet, der mit seinem Taster auf dem Umfang der Walze 3 gleitet und die Oberflächentemperatur der Walze 3 abfühlt. Mit 66 ist ein Breitenfühler bezeichnet, der anhand der Einstellung der Handhabe 49 die jeweils eingestellte Breite des Schachtes 12 als Messwert abgibt. Dieser Messwert gelangt über eine Leitung 67 an ein zentrales Steuergerät 68. Über eine Leitung 69 gelangt der Temperaturmesswert des Thermofühlers 65 an dieses Steuergerät. Von dem Steuergerät wird in Abhängigkeit von Messwerten auf den Leitungen 67, 69 und nach einem voreingestellten Programm und in Abhängigkeit von Einstellungen an den Handhaben 70, 71 über die Leitungen 72, 73, 74 die Heizung der Walzen 1, 2 und 3 angesteuert und über die Leitung 75 der Antriebsmotor 19.

Der Grill wird wie folgt betrieben : Es werden zunächst die Walzen 1, 2, 3 aufgeheizt. Dann ist das Gerät betriebsbereit, was an der Anzeige 76 des Steuergerätes 68 angezeigt wird. Nun können Steaks von oben durch den Einschubschlitz 56 eingeführt werden, die in ihrer Stärke der jeweiligen Breiteneinstellung des Schachtes 12 beziehungsweise des Einschubschlitzes 56 entsprechen. Diese Steaks durchlaufen dann in Pfeilrichtung 77 den Schacht 12, werden dabei gegrillt und gelangen fertig gegrillt an den Auswurfschlitz 78. Sollen stärkere beziehungsweise dickere oder schmälere beziehungsweise dünnere Steaks verarbeitet werden, dann wird zuvor an der Handhabe 49 die Breite des Einschubschlitzes 56 und des Schachtes 12 entsprechend verstellt.

In Abänderung des dargestellten Ausführungsbeispiels kann ein in Figur 2 gestrichelt eingezeichneter Mikrowellenstrahler 80 vorgesehen sein, dessen Strahlung zwischen den Walzen 1 und 3 hindurch in die Mitte des Schachtes 12 gerichtet ist, und zwar verteilt über die ganze Länge der Walzen. Die Intensität des Mikrowellenstrahlers kann vom Steuergerät 68 über eine Steuerleitung 81 eingestellt werden in Abhängigkeit von der jeweils eingestellten Schachtbreite, die über die Leitung 69 an das Steuergerät gemeldet wird.

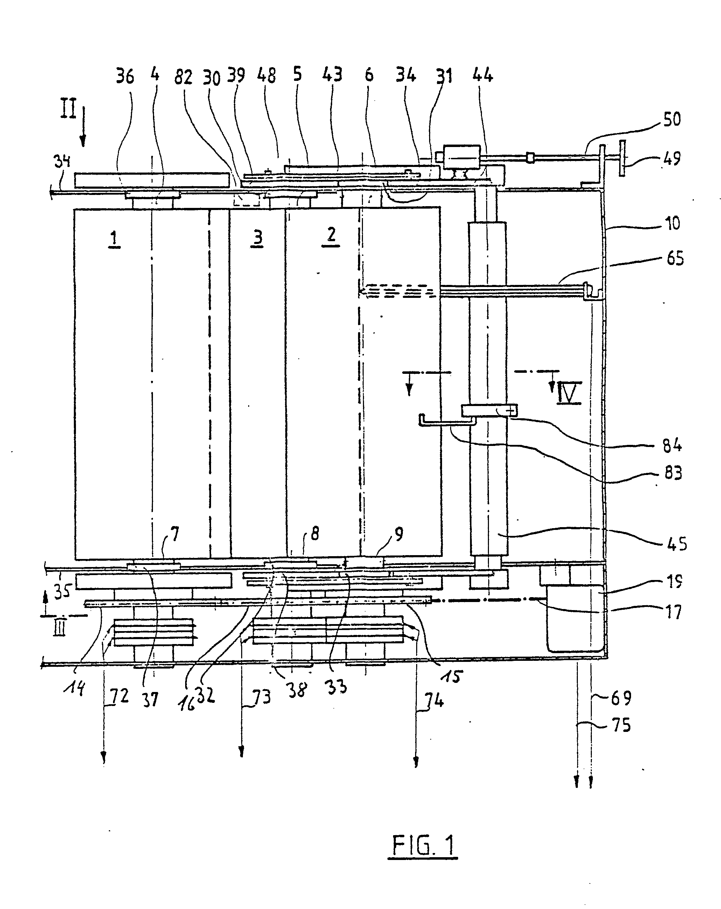

Statt des Mikrowellenstrahlers 80 oder zusätzlich zu diesem kann auch ein Mikrowellenstrahler 82 wie gestrichelt in Figur 1 und 2 eingezeichnet vorgesehen sein, der in axialer Verlängerung der Mitte des Schachtes neben dem Schacht angeordnet ist und dessen Strahlung parallel zu den Walzenachsen in die Mitte des Schachtes gerichtet ist, also senkrecht zur Zeichenebene der Figur 2. Auch in diesem Fall kann die Intensität des Strahlers vom Steuergerät verstellbar sein über eine der Steuerleitung 81 entsprechende Leitung.

## Patentansprüche

1. Durchlaufgrill insbesondere für Steaks mit einem Schacht (12), dessen vertikal gerichteter Einlaufabschnitt (11) sich zwischen zwei gegenläufig mit gleicher Umfangsgeschwindigkeit und nach unten fördernd antreibbaren beheizbaren und achsparallel angeordneten Einlaufwalzen (1, 2) erstreckt und an den sich ein zweiter Schachtabschnitt (13) leicht angewinkelt anschließt, der sich zwischen der einen Einlaufwalze (2) und einer dritten beheizbaren Walze (3) erstreckt, die zu dieser Einlaufwalze (2) achsparallel angeordnet, gegenläufig und mit gleicher Umfangsgeschwindigkeit antreibbar ist, dadurch gekennzeichnet, daß die Schachtbreite der beiden im Winkel zueinanderstehenden Schachtabschnitte (11, 13), gleichmäßig verstellbar ist durch schwenkbare verstellbare Lagerung der auch am zweiten Schachtabschnitt beteiligten Einlaufwalze (2) und, daß die beiden anderen Walzen (1, 3) feststehend gelagert sind.

2. Grill nach Anspruch 1, gekennzeichnet durch eine Abdeckung (55) für die Walzen in der in nach oben gerichteter Verlängerung des Einlaufabschnittes ein Einschubschlitz (56) ausgespart ist, der in seiner Breite entsprechend der eingestellten Breite des Schachtes (12) einstellbar ist.

3. Grill nach Anspruch 1 und 2, gekennzeichnet durch eine Einstellvorrichtung (48) zum Einstellen der Schachtbreite und eine mit dieser gekoppelten Einstellvorrichtung (59, 61) für die Breite des Einschubschlitzes (56).

4. Grill nach einem der vorhergehenden Ansprüche, dadurch gekennzeichnet, daß für den Antrieb aller Walzen (1, 2, 3) eine gemeinsame endlose umlaufende Antriebskette (17) vorgesehen ist, die mit Zahnrädern (14, 15, 16) die auf der einen Schachtseite auf Wellenstummel (7, 8, 9) der Walzen (1, 2, 3) gesteckt sind kämmt und zwar mit ihrer Außenseite mit dem Zahnrad (14) der verstellbar angeordneten Walze (2) und mit ihrer Innenseite mit dem Zahnrädern (15, 16) der beiden anderen Walzen (2, 3) und mit einem federbelasteten Zugritzel (23) hinsichtlich ihrer Länge ausgeglichen und angezogen wird.

5. Grill nach einem der vorhergehenden Ansprüche, dadurch gekennzeichnet, daß die verstellbare Walze (2) beidseitig an den freien Enden in spiegelbildlich zueinander angeordneten, langgestreckten Lagerbügeln (38, 39) gelagert ist, welche Lagerbügel an ihrem anderen Ende schwenkbar um eine gemeinsame Schwenkachse, die sich parallel zu den Walzenachsen erstreckt, am Grillgestell (34, 35) gelagert sind, an dem auch die Walzen (1, 3) gelagert sind.

6. Grill nach einem der vorhergehenden Ansprüche, gekennzeichnet durch eine von außen zugängliche Handhabe (49) zum Betätigen der Einstellvorrichtung (48) zum Einstellen der Schachtbreite und für die Einstellvorrichtung (59, 61) für die Breite des Einschubschlitzes (56) und zum Festlegen derselben in der bereits eingestellten Stellung.

7. Grill nach Anspruch 6, dadurch gekennzeichnet, daß die Handhabe (49) auf eine drehbar gelagerte Gewindestange (50) einwirkt, auf die eine verdrehungssicher an den einen Lagerbügel (39) gekoppelte Gewindebuchse (51) einwirkt, und daß eine Übertragungswelle (45) koaxial zu den Walzen vorgesehen ist, die mit den Lagerbügeln (38, 39) auf beiden Seiten drehgekoppelt ist.

8. Grill nach einem der vorhergehenden Ansprüche, gekennzeichnet durch einen Mikrowellenstrahler (80, 82), dessen Strahlung in den Schacht (12) gerichtet ist und dessen Intensität entsprechend der eingestellten Schachtbreite einstellbar ist.

9. Grill nach Anspruch 8, dadurch gekennzeichnet, daß der Mikrowellenstrahler (82) koaxial zu den Walzen (1, 2, 3) in den Mittelbereich zwischen den drei Walzen gerichtet ist.

10. Grill nach Anspruch 8, dadurch gekennzeichnet, daß der Mikrowellenstrahler (80) quer zu den Walzenachsen durch den Zwischenraum (24) zwischen den nicht verstellbaren Walzen (2, 3) hindurch in den Schacht (12) gerichtet ist.

## Claims

1. Grill, particularly for grilling steaks with a passage (12), which vertical inlet section (11) extends between two heated inlet rolls (1, 2) being parallel to one another, driven at the same peripheral speed and in the opposite directions, and with a second section (13), which extends between one of the inlet rolls (2) and a third heated roll (3), which is parallel to the inlet roll (2) driven in the opposite directions at the same peripheral speed, characterized in that the width of the two sections (11, 13) which are standing at an angle to each other is adjustable by the swiveling adjustable bearing of the inlet roll (2) being involved to the second section, and in that the two other rolls (1, 3) are stationary mounted.

2. Grill according claim 1, characterized in a cover (55) for the rolls, having an inlet opening (56) recessed within the extension of the inlet section, the width of which inlet opening being adjustable according to the selected width of the passage (12).

3. Grill according claim 1 and 2, characterized in an adjusting device (48) to adjust the width of the passage and by a connected adjusting device (59, 61) to adjust the width of the inlet opening (56).

4. Grill according one of the preceding claims, characterized in that for driving all rolls (1, 2, 3) an endless chain (17) is provided, which meshes with sprocket-wheels (14, 15, 16) being sticked up on stub shafts (7, 8, 9) of the rolls (1, 2, 3) which are positioned on one side of the passage, namely with its outer surface with the sprocket-wheel (14) of the adjustable roll (2) and with its inner surface with the sprocket-wheels (15, 16) of the two other rolls; and which is tensioned by a spring-biased tensioning wheel (23).

5. Grill according one of the preceding claims, characterized in that the adjustable roll (2) is mounted in one end each of pivotable arcuate bearing frames (38, 39), which bearing frames are mounted with their other ends for movement about an axis parallel to the axes of the rolls in the bearing frames (34, 35) in which the rolls (1, 3) are mounted as well.

6. Grill according one of the preceding claims, characterized in a handle (49) which is accessible from the exterior for operating the adjusting device (48) adjusting the width of the passage and for the adjusting device (59, 61) for the width of the inlet opening (56) and for fixing it at an adjusted position.

7. Grill according claim 6, characterized in that the handle (49) works on a feed screw (50) which meshes with a nut (51) which is non-rotatably docked at the bearing frame (39), and in that coaxially to the rolls a shaft (45) is provided which is pivotally docked on both sides with the bearing frames (38, 39).

8. Grill according one of the preceding claims, characterized in a microwave radiator (80, 82) which radiation is directed into the passage (12) and which intensity is adjustable according to the width of the passage.

9. Grill according claim 8, characterized in that the microwave radiator (82) is directed coaxially to the rolls (1, 2, 3) into the central portion between the three rolls.

10. Grill according claim 8, characterized in that the microwave radiator (80) is directed at right angles to the axes of the rolls through the space (24) between the rolls (2, 3) into the passage (12).

**Revendications**

1. Grilleur, servant à rôtir des steaks d'une manière continue, avec un puits (12) dont le tronçon d'entrée vertical (11) s'étend entre deux cylindres d'entrée (1, 2) tournant en sens opposé, à la même vitesse périphérique, ces deux cylindres à axes parallèles pouvant être commandés et chauffés, la viande se déplaçant vers le bas, à savoir avec un puits auquel se raccorde un deuxième tronçon de puits (13) (légèrement coudé) qui s'étend entre le cylindre d'entrée (2) et un troisième cylindre chauffable (3) à axes parallèles à celui du cylindre d'entrée (1) qui peut être commandé de manière à tourner en sens opposé et à la même vitesse périphérique, caractérisé par le fait que la largeur du puits, formé par les deux tronçons de puits (11, 13) formant entre eux un angle est uniformément réglable grâce à des paliers déplaçables et pivotables qui font également partie du deuxième tronçon de puits ET que les deux autres cylindres (1, 3) sont montés de manière à être fixes.

2. Grilleur, conforme à la revendication 1, caractérisé par un revêtement (55) pour les cylindres, à savoir par un revêtement, dans lequel il est pratiqué dans le prolongement (dirigé vers le haut) de la section d'entrée une fente d'introduction par poussée (56), réglable dans sa largeur d'une manière qui correspond à la largeur réglée du puits (12).

3. Grilleur, conforme aux revendications 1 et 2, caractérisé par un dispositif de réglage (48) prévu pour régler la largeur du puits et par un dispositif de réglage (59, 61), accouplé à ce dispositif (48), cela pour la largeur de la fente d'introduction par poussée (56).

4. Grilleur, conforme à une des revendications précédentes caractérisé par le fait que, pour la commande de tous les cylindres (1, 2, 3) il est prévu une chaîne de commande (17), commune, sans fin, tournante, en prise avec des roues dentées (14, 15, 16) qui, sur une face du puits, sont fixées sur les bouts d'arbre (7, 8, 9) des cylindres (1, 2, 3), laquelle chaîne est réglée en longueur et tendue par sa face extérieure, par la roue dentée (14) du cylindre (2) monté de manière à pouvoir se déplacer et par sa face intérieure, par les roues dentées (15, 16) des deux autres cylindres (2, 3) ainsi que par un pignon de traction (23) chargé par un ressort.

5. Grilleur, conforme à une des revendications précédentes, caractérisé par le fait que le cylindre déplaçable (2) est monté à ses extrémités libres, dans des étriers de palier (38, 39), étirés en longueur et disposés symétriquement l'un par rapport à l'autre, comme l'image d'un objet dans un miroir, lesquels étriers de palier, pivotables à leur autre extrémité autour d'un axe de pivotement commun, s'étendant parallèlement aux axes des cylindres, sont montés sur le bâti du grilleur (34, 35) sur lequel sont également montés les cylindres (1, 3).

6. Grilleur, conforme à une des revendications précédentes, caractérisé par la présence d'une manette (49), accessible de l'extérieur et utilisée pour actionner le dispositif de réglage (48), prévu pour régler la largeur du puits et pour le dispositif de réglage (59, 61), pour la largeur de la fente d'introduction par poussée (56) et pour fixer ce dispositif dans la position déjà réglée.

7. Grilleur, conforme à la revendication 6, caractérisé par le fait que la manette (49) agit sur une tige filetée (50), montée de manière à pouvoir tourner, à savoir une tige sur laquelle agit une douille filetée (51) couplée à un étrier de palier (39), l'ensemble étant d'une rigidité parfaite à la torsion, grilleur caractérisé par le fait qu'il est prévu un arbre de transmission (45), dont l'axe est le même que celui des cylindres et qui, des deux côtés est couplé aux étriers de palier (38, 39) sur les deux faces, de manière à pouvoir tourner.

8. Grilleur, conforme à une des revendications précédentes, caractérisé par la présence d'un radiateur à micro-ondes (80, 82), dont le rayonnement est dirigé de manière à entrer dans le puits (12) et dont l'intensité de ce rayonnement est réglable de manière à s'adapter à la largeur réglée du puits.

9. Grilleur, conforme à la revendication 8, caractérisé par le fait que le radiateur à micro-ondes (82), ayant le même axe que ceux des cylindres (1, 2, 3) est dirigé dans la zone centrale comprise entre les trois cylindres.

10. Grilleur, conforme à la revendication 8, caractérisé par le fait que le radiateur à micro-ondes (80) est, transversalement par rapport aux axes des cylindres, dirigé de manière à traverser l'espace intermédiaire (24) compris entre les cylindres non déplaçables (1, 3) pour pouvoir entrer dans le puits (12).

FIG. 1

0 092 046

FIG. 2

FIG. 5

2

FIG. 3

FIG. 4

3